# EUROPEAN PATENT APPLICATION

(11) **EP 0 224 595 A1**
(43) Date of publication of application: **10.06.1987**
(21) Application number: 86903576.6
(22) Date of filing: 30.05.1986
(51) Int. Cl.: G01J 5/02, G01J 5/12

(54) **PYROELECTRIC INFRARED SENSOR**

(30) Priority: 06.06.1985 JP 123695/85; 06.06.1985 JP 123696/85; 10.07.1985 JP 106009/85; 11.07.1985 JP 1535/85; 07.05.1986 JP 105200/86; 23.05.1986 JP 119831/86
(71) Applicant: NIPPON CERAMIC CO., LTD., Tottori-shi, Tottori 680 (JP)
(72) Inventor: TANIGUTI, Yoshiharu Nippon Ceramic Co., Ltd., Tottori 680 (JP); EDANO, Shigeki Nippon Ceramic Co., Ltd., Tottori 680 (JP); TANAKA, Kazuhiko Nippon Ceramic Co., Ltd., Tottori 680 (JP); TANIGUTI, Shiniti Nippon Ceramic Co., Ltd., Tottori 680 (JP); KURAMOTO, Megumi 575, Kusune, Tottori 689-05 (JP)
(74) Representative: Robinson, John Stuart
(86) International application number: PCT/JP86/00275
(87) International publication number: WO 86/07449

(57) **Abstract**

57 The conductivities of a window and a can are raised to suppress the external noise for. the purpose of improving the performance and reliability of a human body-detecting pyroelectric infrared sensor, and in a high-place-disposed human body-detecting infrared sensor, the difference of electromotive force per unit area of the inner and outer electrodes of the sensitive element consisting of concentric circular electrodes is given to improve the temperature compensation thereof. Furthermore in a pair of wall type human body-detecting infrared sensors, the electromotive force of the upper sensitive electrode is designed to be higher than that of the lower sensitive electrodes so as to improve the overall sensitivity of the pair of sensors. The performances of a pair of sensitive elements, the other pair of sensitive elements and the peripheral parts thereof, all of which are accommodated in the same can, are set different from each other so as to suppress the possibility of concurrence of noises from the independent outputs. An optical member consisting of a polymeric material for converging or diffusing infrared rays is added as a separate member to the above infrared sensor, and the incident rays upon the inner and outer sensitive electrodes concentrically arranged on a substrate are corrected so that the rays become substantially vertical, whereby the angle of field is regulated, and the manufacturing cost is reduced.

## Description

### Background of the Invention

### 1. Field of the Invention

The present invention relates generally to a Pyroelectric Infrared Sensor. (hereinafter described a infrared sensor).

More particularly, this invention relates to several undermentioned improvements and developments of the adhesion between a can and window material, the adjustment of the electo-motive force from the sensing elements. the dimensions and the electric connection of the sensing elements, the adaptability among the sensing elements and other peripheral components or parts, and the supplemented optical material for use mainly in intrusion alarm system.

### 2. Description of Relevent Art

Generally in many known infrared sensors, a window material such as Si,Ge or Al,0, etc.,adhered to a can having a fundamental character to transmit the infrared energy and then, has the conductivity either inherently (by its own character or appendantly (by appandant processing). Further such window material must be adhered to a can in the conductive state.

It is well-known that the sensing elements of the concentric-circle shape is most suitable for the infrared sensors which are mounted and installed on higher portions such as the ceiling etc., and that the plural sensing elements of each identical sensing electrode area are the most proper for the above-mentioned applications.

It is apparent that the arrayment of a couple sensing electrodes on a substrate is efficient workability in the production process. And also, has been recognized that it is more desirable that a couple sensing elements and the peripheral components has the symmetrical or similar characteristics with the other.

In addition, it is also well-known that a costly crescent-shaped Negative-Meniscus lens, with antireflection coating, consisting of Si0 is assembled or mounted on the infrared sensor in the manufacturing process.

However, the previouly known adhesion of a point only between a can and a window with the conductive adhesives had some defects of the incompleted conductive adhesion as well as the non-hermeticity between them.

Also, the infrared sensor, for upper or highter portion installation, havieng the sensing elements of the concentric-circle shapes and the identical sensing electrode area, had the serious fail to give the false alarm signal dependent upon the change of the ambient temperature, due to the impossibility of the perfect temperature compensation.

The infrared sensor took, in a can, one and another pairs of the sensing elements comprising the coessential material and the idetical characteristics, and their periphral components, can get the separate signal from each pair of

sensing elements, but even if these idependent signals is coped with through AND circuitry, the false alarms caused by the synchronous White Noise or Spike Noise from each sensing elements was not avoidable.

And further, the conventional infrared sensors built in the costly optical member for condensing or adjustment of the optical beam(s) was extremly wasteful because the rejective infrared sensors resulted in the electric failure have been done away in the state built in such optical members, as well as worse production yield.

It was intended to improve the reliability and the sensitivity of a Infrared Sensor in the intrusion alarm system for wall- mounted.

The present invention is for improvement and development of above matter.

### 3. Summary of the Invention

The present invention provides a infrared sensor particularly adapted for use in intrusion alarm system, which introduces the improvement of the

characteristics and reliability of above sensor, and which facilitates to have more wide application.

The infrared sensor in accordance with the present invention designs the improvement and development of conductiove adhesion between a can and a window, the adjustment of the electro-motive force as per a unit of the sensing electrode area for higher-portion-installed sensor, the accomplishment of the completed temperature compensation, and further, the avoidance of the synchronous white noise and spike noise generated against the environmental changes, making each pair sensing elements to assemble their peripheral components with some different characteristics.

Additionally to this sensor, this invension designs the optical member to adjust the condensing and the diffusing of optical beams, and which comprises the low cost material of a high molecule substance, which rectifies the incident lights to the inside and outside sensing elements with concentric-circle-shaped, positioned on a substrate, and which intends to regulate the the field of view and to reduce the cost of infrared sensors.

### 4. Brief Description of Drawings

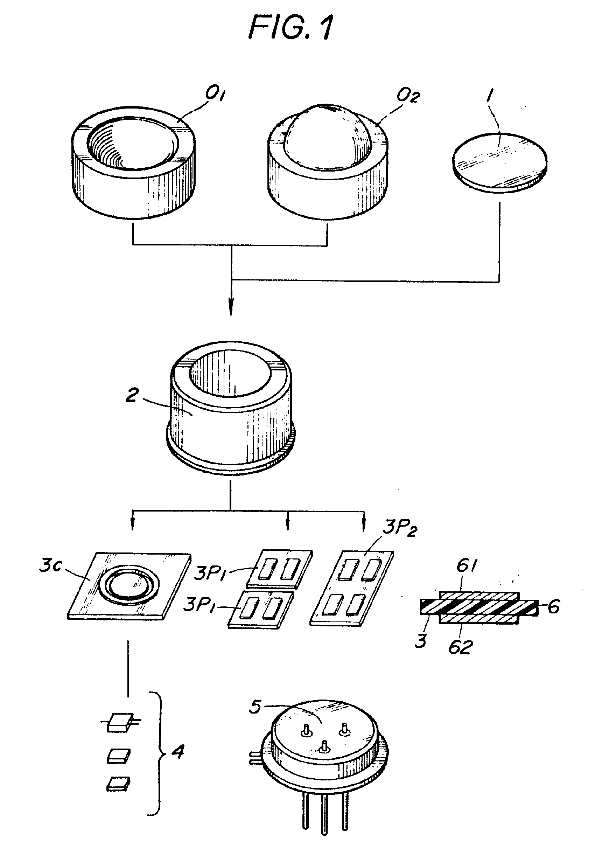

In Fig.1, Fig.1 is a prespective view of the respective components composing the infrared sensor which embodies the present invention.

Firstly, one example of both the optical members 0, and 0, of the high polymer system to be mstalled in front of a window 1 having optical filter characterestic, and the portion that conductive adhesive to be applied inside of a can2 having an aperture for installation of a window on the top is shown in Fig.l.

Further, the Fig.1 shows the representative substrates which should be put into a can for two kinds of sensing elements on which sensing electrodes arc placed, that is, a substrate 3c having concentric-circle-shaped sensing elements which should be put on a high portion and substrates 3P, and 3P, each of which consists of one or two pieces of substrate(s) and has two sets of a pair of sensing elements. And then shows other electronic components 4 other than

the elements (only a part of FEI, a resister, a condensor, IC and so on) and a header 5 for mounting the said elements,moreover shows the model of a sensing element 6 by a longitudinal sectioral view in order to make the description clearer.

It is shown in that view that the sensing element 6 has a front electrode 61 on the surface of a substrate 3 consisting of pyroelectric material and a back electrode 62 on the opposite side or the back of the substrate.

The sensing element consists of two opposite electrodes on a front and a back surface of a substrate , and it is usual to provide a ingrade lead electrode in the above electrodes in order to electrically connect the element to the fixed place, however as the model, which is not shown in detail in drawings because it is not necessary in view of the content of the present invention.

Fig.2 is a logitudinal sectional view showing the adhesion conditions by a conventional method between a can2 and a window 1.

Fig.3a is a plan view being seen from the bottom of view taken vertically to the sheet along the line cc of Fig.2 and Fig.3b and 3c respectively shown in the same description two- point adhesion method and all circle adhesion method of a can2 and a windowl by using conductive adhesive with respect to the present invention.

Figure 4a is a top plan view of sensing electrode of a concentric-circle-shaped sensing element of conventional infrared sensor which shall be installed on high place.

Figure 4b shows as a top plan view an illustration of a concentric circle-shaped sensing electrode in respect to the present invention.

_{F}ig 4a and 4b shows two of sensing electrodes 611 and 612 are concentrically placed into a substrate 3.

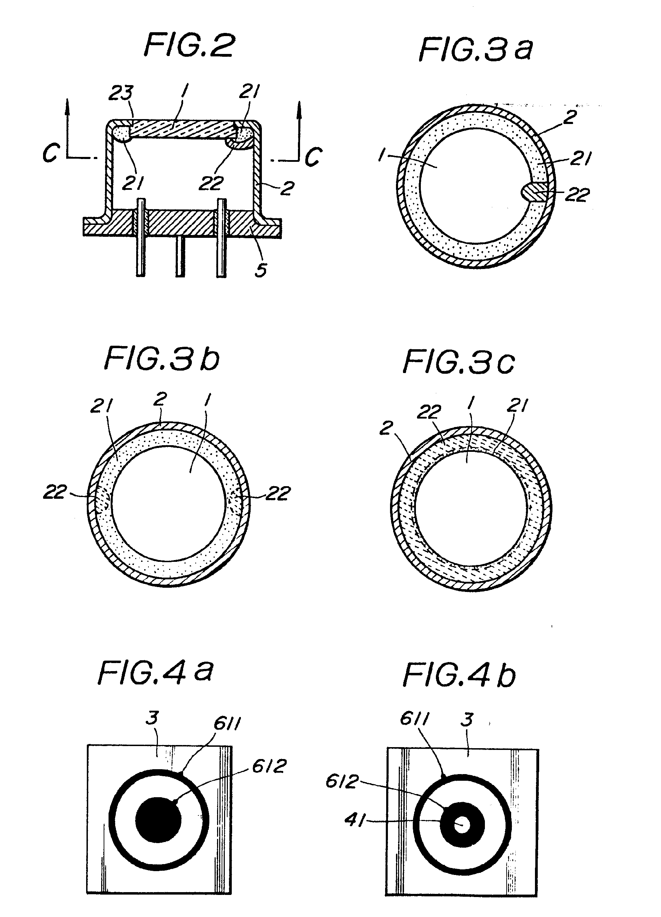

Referring to Fig.4b, there is shown a non-electrode area 41, which is not polarized, inside sensining electrode 612.

On the order hand, there is respectively shown in Fig.Sa, 5b, 5c, and 5e each substrate for a wall mounted type sensor, not for putting on high place, and an illustration how to place the sensing electrodes to each of them.

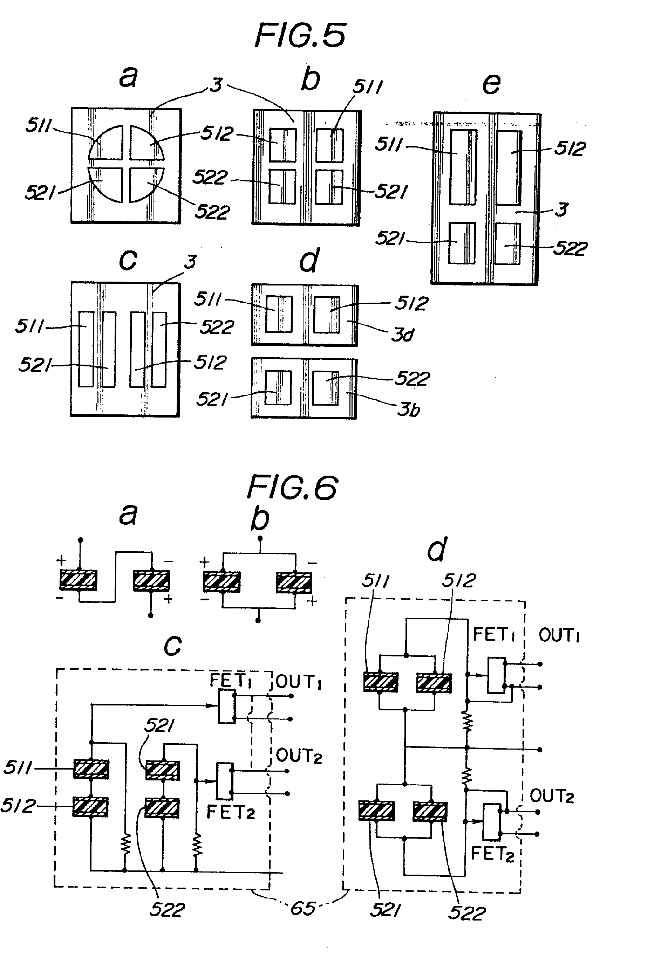

Referring to Fig.5a, a quarter circled sensing electrodes 511, 512, 521 and 522 are placed on a piece of substrate 3 consisting of pyroelectric material, and as shown in Fig.6c and 6d, wires of the sensing electrodes are independently connected to FET-1 and FEI-2 in series opposite and in parallel opposite.

In Fig.5b, four square sensing electrodes are placed on one substrate 3 and the numerals of them are the same as in Fig.Sa since the said sensing electrodes differ from them in Fig.Sa, 5d and 5e.

The same way is taken in Fig.5c, 5d and 5e.

Fig.5C shows electric connection of four pieces of sensing electrode. The one pair consists of two pieces of sensing electrode which are placed across in odd number order from the left and the other even-numbered electrodes form a pair, and they are connected in parallel opposit or series opposite.

Fig.5d shows two pieces of divided substrate 3a and 3b on which each pair of sensing electrodes is placed.

Fig.5e shows sensing elements of which sensing electrode of upper side differ from wu of lower sode in size.

Fig.6a and 6b show the basic electric connection of the sensing electrodes in series opposit and parallel opposite. Further Fig.6c and 6d show the typical electric connecti.on of infrared sensor in respect to the present invention, and show the sensing elements 511, 512, 521 and 522 and other electronic components (a resistor, FET).

It is opssible to indlude IC in a can indicated by dotted lines if necessary, however, it is omitted in Fig.6.

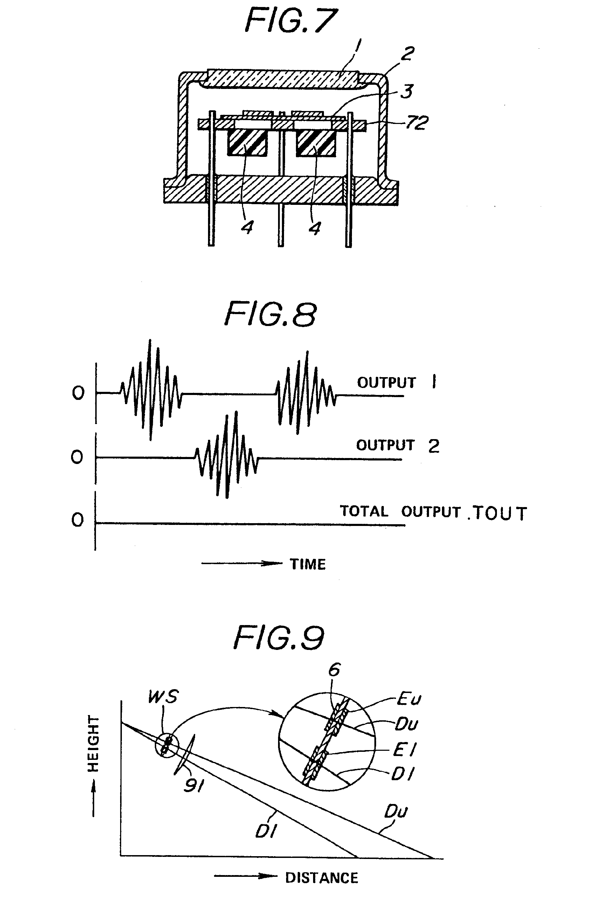

Fig.7 is a longitudinal sectional view showing an illustration of assembled infrared sensor having four pieces of sensing elements with respect to the present invention, in which a holder 72 mounting the said substrate 3, a resistor(not shown in drawings), FEI and other electronic component 4 on a header is placed and the holder is covered with a can 2 with a window on its bead which has sealing function.

Fig.8 shows output characteristic of noise signal and the like in case that th said infrared sensor is put in an environment.

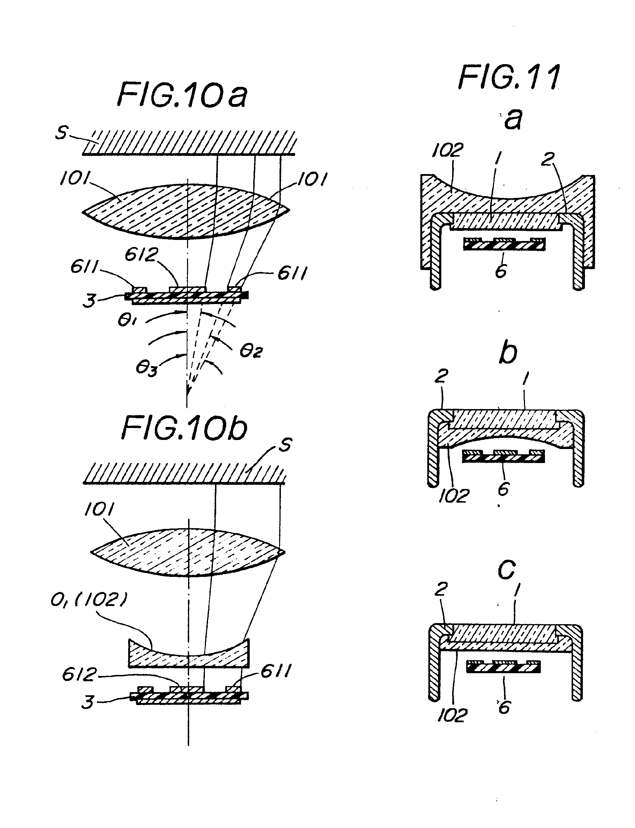

Fig.9 is a model view showing the sensing distance Du of a sensing element Eu and Dl of a sensing element E1 in a wall mount type sensor Ws having a lens 91 the former consists of the front sensing electrode 511 (512) and the latter does of back sensing electrode 521(522), a part of which is enlarged in a circle.

Fig.10a is a model view showing a condition that concentric shaped sensing electrodes 611 and 612 on a substrate detect condensed energy by an optical lens 101 with respect to the conventional infrared sensor when infrared energy is radiated from an infrared radiator S.

Fig.10b is an optical model view in which a condensing lens 101 is put on optical course between the infrared radiator S and a sensing electrode, and then a concave lens 10 made from a highpolymer resin by which the present invention is characterized on optical course between the said condensing lens 101 and a sensing electrode.

Fig.lla, llb and 11c show same examples of installing the concave lens or a fresnel lens which has the equivalent function to the infrared sensor by a longitudinal sectional view limiting to the ralated past materials.

In Fig.lla, the concave lens 102 made from high polymer resin is installed to the top of the can2 of finished infrared sensor, and in Fig.lib, the above said lens 102 is installed between a filter 1 and sensing element 6.

Further in Fig.llc, a fresnel lens 102 which has the same function as the said lens 102 is installed between a filter 1 and a sensing element 6.

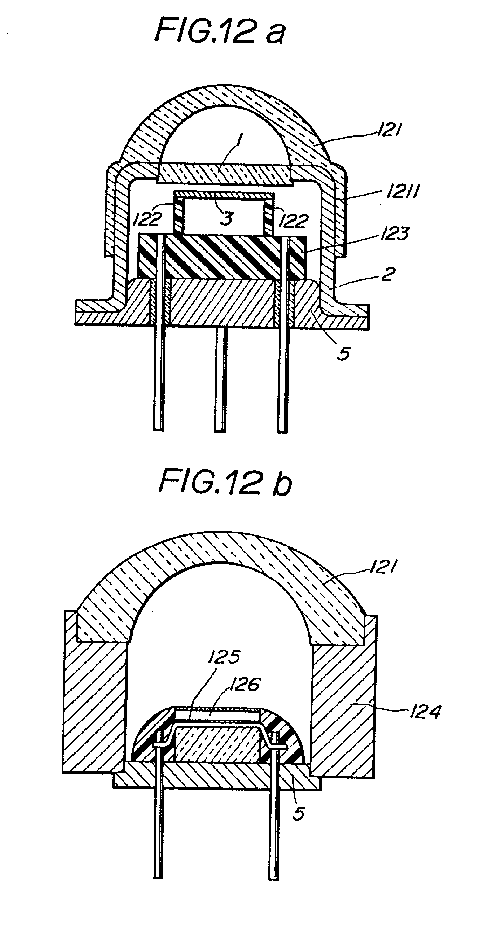

Fig.12a shows by a longitudinal sectional view an illustration of the infrared sensor on which an optical material 121 is puts the optical element with a setting part 1211 made from high ploymer resin has the function of condensing for a wide angle, and the sensor consists of the above said materials except a substrate 3 having a sensing element, a holder 1 supporting 3a and 3b and block 123 on which mount other electronic components than the sensing elements.

Fig.12b is a longitudinal sectional view of the conventional nea-infrared sensor in which a wide-angle condensing lens 121 made from Si0 is supported only by a supporter 124 and a sensing element 125 is placed on back of an optical filter 126, however, it's clear that the structure is totally vulnerable against external noise signal and since sensing target is different from that of far-intrared sensor of the present invention, the results are the matter of course.

### 5. Detailed Description

The present invention aims decreasing the cost and widening of usage by means of new adhesion method of windows and can, new adjustment method of electromotive force efficiency per unit area of sensing elements which have sensing electrodes in the shape of concentric circle on one substrate, different electric conjunction method obtained by altering areas of sensing electrode for eahc pair of two sensing elements and furthermore new construction method of performance of electric components inside the can in the infrared sensor which gains plural signals generated by plural sensing elements, which are put in a can, through prescribed connected wires, and at the same time new combination of production-effective optical components and the infrared sensor.

To clearly systematize organization of the present invention, the prespective view is shown in Fig. 1.

Firstly, for the purpose of broadening applications and improving performance of the infrared sensor, optical components 0, and O₂, which are designed for wide angle or condensed light direction adfustment shall be mentioned, and then the adhison method between window and can which is particullarly impotant among making of can2 with window 1 including sensing elements of the infrared sensor shall be mentioned.

Their mutual relations between a sensing element which has sensing electrodes on a substrate 3c, sensing elements which have at least two pairs of sensing elecrodes on one or electric components 4 shall be mentioned hereafter.

A base 5 carrying those components does not have special meaning in the present invention, however, since it is an integral part, ita drawing is shown in Fig.l.

To make the terms used in these sentences clear, the construction of a sensing element 6 which consists of the front electrode 61, the back electrode 62, and the substrate 3c or 3p,, 3p, is shown in Fig.l by the vertical cross-section view as an example.

Since the sensing electrode stands for portion where the front electrode and the back electrode face each other with a substrate between, the portion where a part of the front electrode or the back electrode is continuously exteended to be supplied with such as function fo lead terminal is not referred as the sensing electrode.

The introduction is finished here, and the detailes of the present invention shall follow here after referring to the figures in order.

The conventional construction, as seen in application disclosure 56-27640 of japan wtility model, is such that the conductive adhisive 22 is used to connect window surface to a car.2 after adhesion of a window 1 onto a can2 using nonconductive adhesive.

Houwever, the window surface has high insulation resistance value because optical coating strata is foamed on it to function as a filter therefore, there is a defect that the conventional infrared sensors can not out off noise caused by ratio wave which comes from the outside since electric contact resistance between the window surface and can is high (for example, silicon sindow, of which characteristics are 6.5 µ cut-on-bandpass 14 µ , has 10¹²Ω resistance). It's desirable that the uncoated portion of substrate and a portion of the can to be connected each other directly and held together, however, since there is comsiderable difficulty in firmly comnecting fragile Si or Ge window to the can, as presented in the present invention, perfect interception of outer noise has met one of the comditions to enhance the reliability as an infrared sensor by controlling electric connection resistance value between the can and window at less than 500k Ω by means of application of the conductive adhesive 22 on to outer circle of the window (section) 23 where aptical coating is not applied and on to two portions as shown in Fig.3b, and further onto total outer circle as shown in Fig.3c.

Further, epoxy resin 21 might be used after hardening of the conductive adhesive 22 in some cases to reinforce mechanical adhesion strength between the can and window.

The two sensing elements form one pair and the two pairs are composed on one or more substrates 3, 3a, 3b whereby the reliability as an infrared sensor for human body defection can particularly be enhanced, as desposition of the sensing elements is shown in Fig.5a, b, c, e by way of example.

Those electric elements are connected to separate FEIs per the pair in series opposite or parallel opposite.

The combination of one pair of sensing elements connecting in parallel opposite and other pair of sensing elements connecting in series opposite is related to the present invention in one can, and furthermore property of each element comprising one pair should better be equivalent, despite such drawings are omitted, however, it is desirable that the property of each element differs eahc other including their sensing element sizes in some cases.

For example, one pair of sensing elements 6 which detect lower side comprising one pair of the two pairs of sensing elements Eu, E1, of which location is upper and lower side, is to cover shorter (narrow) range than the other pair of upper side which detects by the same lens 91 (or mirror), so that the sensitivity of lower placed pair can be lower than that of upper placed pair as shown in Fig.9 in case that a infrared sensor is used for wall type human detection.

In other wards, the present invention indudes the desposition such that the size of upper placed pair of sensing elements is bigger than that of the lower placed pair as shown in Fig.5e, which is designed to satisfy sensitivity requirement being in proportion to each sensing distance Du, D, of the pairs of upper and lower placed sensing elements in order to effectively divide area on the limited substrate 3.

It is one of the main factors of the present invention that each pairs of components of a infrared sensor having plural pairs consists of at least two paris of sensing elements, especially having independent output terminals possess different properties each other.

The the virtical cross-section of the infrared sensor compresing two pairs of sensingelements is shown in Fig.7 as an example.

If all the electric components which are connected to each pair of the elements have the same properties, spike noises which arise very low frequency ought to arise from independent output terminals simulataneously, wherefore it becomes impossible to prevent false alarms owing to spike noise by using and circuit, thus it becomes impossible to produce high reliable human body detection equipments.

If differenct properties are given to electric components of each pair in accordance with a characteristic of the present invention, because of the difference between a component of output 1 having tendency that spike noises arise in summer season when temperature is high and a component of output 2 having tendency that spike noises aries in winter season when temperature is low, spike noises do not arise simultaneously at the two output terminals, as shown in Fig.8, therefore the total output (lout) of which the two noise signals are passed through and circuit will never arise false alarms where as the present invention enable to supply high reliable infrared sensor for human body detector.

Then if electromotive efficiencies per unit area of sensing element, provided with concentric circle shaped sensing electrodes 611, 612 on a substrate 3 made from Pyroelectric material, which shall be mounted to high place are equivalent, the electrode 611 of outerside and the electrode 612 of inner side ought to offset Pyroelectric output each other which arises due to temperature change by connecting in parallel opposite or series opposite as shown in Fig.6 and b.

However, as the matter of fact, the infrared having a vertical incident angle against the surface of the sensitive electrode cannot be received, according to using frequently the converging lens 101 or some mirror between a rediant source S of the infrared energy and sensitive electrodes 611, 612 as shown only component parts in Fig.10a.

The infrared energy converged through the lens is directed toward the focus of the converging lens, and reaches to the flat substrate 3 having the sensitive electrode.

In this case, the center axis and its incident angle θ₁, θ₂,θ₃ are increased, according to reaching its outside from the center axis of the lens.

As a result, since the effective energy Ee is Ee ∞ EIcos e , (E:Emissivity Factor, I:Intensity of Input Energy), θ₁ in the center part of the sensitive electrode is smaller, the effective snesitive energy is larger than the outside wall of the can.

Because of the above, the pyroelectric performance is equal to the same infrared ebergy, also, each sensitive element of the outside wall and the inside having the same area of the sensitive electrode can not generate the equal electromotive force by receiving incident infrared energy through the lens from the outside.

That is to say, the effective sensitive energy which the center sensitive electrode 612 receives is 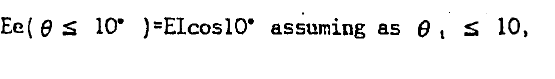 and, the effective energy which the sensitive electrode 611 of the outside wall receives Ee( e = 50 )=Elcos 50 regarding as θ =50°, the ratio of them is 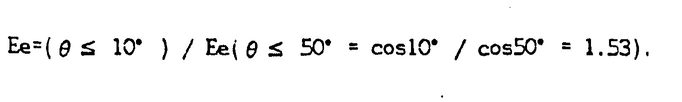 In ether words, supposing that a mean angle of incident ray into the inside electrode is θ = θ₁ / 2 ₌ 10' approximately in Fig.lOa, and a mean angle of the incident ray into the outside electrode is θ =(θ₂ + θ₂) / 2 = 50 , the electromotive force per a unit area of the inside sensitive electrode is effective 1.53 times compared to the outside's.

As a result, in order that the outside sensitive element insisted in this present invention and the inside sensitive element cancel each other those output generated by temperature drift, there are needed to put a reflective paint to change the emissivity E, or to get samller the inside sensitive electrode than the area of the outside electrode, or to get large the state of radiant heat, so that the efficiency of the electromotive force per a unit area of the inside sensitive element may lower the efficiency of the electromotive force per a unit area of the outside sensitive element.

Moreover, as shown in Fig.10b based on the same idea as the above-mentioned, it is possible to correct the incident angle into inside and/or outside sensitive electrode, by setting the converging lens 101 or some mirror on the track of radiate energy from the source of the infrared radiation.

In this present invention, we could get a balance of the electromotive force generated from aforesaid inside and/or outside sensitive element, by provideing with the plano-concave lens made of the polymeric resin as the optical material 0, (102) on the front surface of the sensitive element 6, as shown in the cross section Fig.lla, b, c.

After manufacturing an usual infrared sensor, in case of bonding the plano-concave lens made of the polumeric resin onto the outside of the can2, as shown in Fig.lla, there is an advntage to be able to adjust the corrective optical material 0₁ focused to converging performance of the converging lens.

In Fig.llb, there is also the effect to improve a binding function of the window 1 and the can2, because of an inner pressure from the inside of the optical material 0,.

As shown in Fig.llc, in case of using Fresnel's plano-concave lens, it is possible for the gap or space to narrower between the sensitive element 6 and the window 1.

The infrared sensor applied to the cressent, plano-concave lens 121 made of the polymeric resin in this present invention is quite different in the comprising structure, is very economical, and is easy to comprise, from the optical material which is used SiO as the substrate, which used for the conventional near infrared ray, as shon its typical example in Fig.l2a as a vertical cross section.

Furthermore, by using the cressent, plano-concave lens made of the resin like a polymer as an optical material, there could be made a sensor for a far infrared ray, which has field of view of 180^{*} solid angle onto a fron surface, by means of comprising the on which is mounted given components 3, 122, 123 onto a header 5 as the conventional infrared sensor, and is finished by covering and welding the can 2 having the window 1 to the head as shown in vertical cross section Fig.l2a.

The wavelength band which the conventional near infrared sensor U.S. Patent No. 4,322,124 has intended is 2.4 µ to 3.0 µ (microns), is quite different mechanically from the sensor intended 6.5 µ -. 9.5 µ band in this present invention, on account of the difference by the energy level in infrared radiation.

For one example, in case of that the mean wavelength 2.4 µ and 3.0 µ of the conventional infrared sensor is set up to 2.7 µ (in order to know the mean value easily, though it is not the center value of the energy level), and the mean wavelength in this present invention's intention is (6.5 µ + 9.5 µ ) / 2 = 8 µ ; as the ratio of the energy level under assumption that an amount of those infrared irradiation source is same, proports to the absolute temperature to the 4th power corresponded to its wavelength, (1.073)⁴ / (362)⁴ 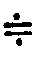 77, viz. the infrared sensor consisted of the conventional structure which is proper to sense from about 77 times, strong source of the infrared energy cannot sense small (ratio of the energy level is mere 1 / 77 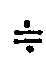 1.3% of the convention's) intended in this present invention.

The definite difference between the infrared sensor in this present invention and the conventional sensor is on that; the structure in this present invention is perfectly shielded by the metal header 5 on the back surface, by the can 2 on the side wall of the can, and in the top of the can by the window 1 of the semiconductive substrate like a silicon or germanium, as shown in Fig.l2a. Moreover, the infrared sensor in this present invention has the optical material 01 which is removable additionally on its head.

Meanwhile, the structure of the conventional sensor has no means to prevent against the external noise, as shon in Fig.l2b.

The reason of the above comes from that the conventional sensor is not influenced by the external noise on account of sensing strong radiation of the infrared energy, this present sensor has much more sensitive performance in order to have to sense the small infrared energy, is also more sensitive against the external noise, as the structure with the perfect shield is required.

For the reason, the idea of the design in this present invention is basically diffenent.

Due to this present invention, we can get more sensitive and more reliable infrared sensor for far infrared band, above all for the human detector. Also, this invention contributes to populize industrially by (extensive applications) or (applications in wide fields).

## Claims

1. This is the method to comprise a window to a can featuring that ; to detract a contact resistance between a can and a window, via a conductive adhesive, onto at least two points or all around the window which is comprised onto a bead of the can provided with an infrared sensitive element ; to get higher reliability of shield efficiency.

2. This infrared sensor featuring that ; to be able to increase an electromotive force of the infrared sensitive element having inside and/or outside sensitive coaxial electrode on one substrate, to raise the electromotive force higher in outside electrode than inside's.

3. This infrared sensor featuring that ; to set up a converging lens in front of the infrared sensitive electrode on one sub strate, and to have a mostly vertical incident ray against a surface of inside sensitive electrode using an optical material like a plano-concave lens in a track of ray.

4. This infrared sensor featuring that ; in the infrared sensor which two infrared snesitive elements having many pairs, at least two pairs, connected electrically to a series opposite or a parallel opposite is encapsuled into the same one can, and each output signal is taken out independently, it is different between the characteristics of the electronic parts comprising one pair and the characteristics of the electronic parts comprising the other paris in which at least one pair encapsuled into the same can, in many characteristics of the electronic parts consisting of each pair.

5. As for the above-description, thsi infrared sensor featuring that ; to equip the infrared sensitive element comprised from every paired substrate.

6. This infeard sensor for use in a wall type human detector featuring that : area of each paired sensitive electrode which two infrared sensitive elements are electrically connected with a series or parallel type is different from the other pair inside the can encapsuled two or more.

7. This infrared sensor featuring that ; the pair of two pairs of the infrared sensitive element encapsuled into one can has two ends, one is the pair of a parallel opposite type, the other is a wire bound of a series opposite type.

8. This infrared sensor featuring that ; area of the sensitive electrode of two infrared sensitive elements in the above 6.7. description, is different in the method of the electrical wire bound between above-described the other element encapsuled into the same one can as the equal pair and the rest of pair differing from area of the sensitive electrode.

9. The optical material comprised of the polymeric resin featuring that ; to be possible to comprise onto the infrared sensor in above-described 1 to 8.
